# EUROPÄISCHE PATENTSCHRIFT

(11) **EP 0 370 375 B1**
(45) Veröffentlichungstag und Bekanntmachung des Hinweises auf die Patenterteilung: **27.09.1995**
(21) Anmeldenummer: 89121151.8
(22) Anmeldetag: 15.11.1989
(51) Int. Cl.: F16P 3/10

(54) **Sicherheitseinrichtung an einem Schrank mit Arbeitsöffnung**
Safety device for a cabinet with an access opening
Dispositif de sécurité pour une armoire avec ouverture d'accès

(30) Priorität: 24.11.1988 DE 3839597
(43) Veröffentlichungstag der Anmeldung: 30.05.1990
(73) Patentinhaber: HÄNEL GMBH & CO. KG, D-74177 Bad Friedrichshall (DE)
(72) Erfinder: Hänel, Michael, Dipl.-Ing., D-74177 Bad Friedrichshall (DE)
(74) Vertreter: Seibert, Hannelore

(56) Entgegenhaltungen:
- DE-A- 2 432 292
- DE-A- 2 444 891
- US-A- 3 730 296

## Beschreibung

Die Erfindung betrifft eine Sicherheitseinrichtung für ein Gehäuse, insbesondere einen Schrank, die eine elektromotorisch angetriebene Vorrichtung zum Verfahren von innerhalb des Gehäuses aufgenommenen Gegenständen und eine Zugangsöffnung aufweist, die mit mindestens einem verstellbaren Abdeckelement versehen ist, wobei die Sicherheitseinrichtung eine Schalteinrichtung umfaßt, die Kontaktteile und zugeordnete Gegenstücke aufweist, und die von dem mindestens einen Abdeckelement betätigbar ist und in der Offenstellung des mindestens einen Abdeckelementes die Stromversorgung der elektromotorisch betriebenen Vorrichtung unterbricht, wobei das mindestens eine Abdeckelement ein isoliertes Leitungsstück aufweist, das einen Stromkreisabschnitt eines Stromkreises darstellt, dessen Unterbrechung die Stromversorgung der elektromotorisch angetriebenen Vorrichtung unterbricht und das Leitungsstück an seinen Enden mit je einem Kontaktteil versehen ist, die mit zugeordneten, am Gehäuse festgelegten Gegenstücken elektrisch verbindbar sind.

Eine derartige Sicherheitseinrichtung ist aus der DE-A-24 32 292 bekannt. Hierbei ist an einem Gehäuse einer Maschine, insbesondere einer Verarbeitungsmaschine oder einer Verpackungsmaschine, eine Zugangsöffnung vorgesehen, die durch eine entfernbare Schutzabdekkung verschließbar ist. An dem Abdeckelement ist ein Stecker mit beabstandeten endseitigen Kontaktteilen vorgesehen, die in der Schließstellung des Abdeckelementes in zugeordnete Gegenstücke eingreifen, die an einer am Gehäuse festgelegten Buchse vorgesehen sind. Somit wird in der Offenstellung des Abdeckelementes die Stromversorgung der Maschine unterbrochen, da der Stecker einen Stromkreisabschnitt des Stromkreises darstellt.

Die US-A-3 730 296 beschreibt eine Sicherheitsschaltung, die zwischen eine Stromquelle und eine Maschine schaltbar ist. Die Sicherheitsschaltung weist als Schaltkontakte ausgebildete Wächter auf, die mit sicherheitsrelevanten Maschinenteilen verbindbar sind. Im geöffneten Zustand der Schaltkontakte unterbrechen diese die Stromversorgung für die Maschine.

Aus der DE-A-24 44 891 ist ein Aktenschrank mit im Inneren angeordneten Aktenträgern bekannt, die mittels einer elektromotorisch angetriebenen Vorrichtung verstellbar sind. An der Frontseite des Aktenschrankes sind verstellbare Abdeckelemente vorgesehen, die in ihrer Offenstellung eine Zugangsöffnung zu den Aktenträgern freigeben. Um die Betätigung der elektromotorisch angetriebenen Vorrichtung nur bei geschlossenen Abdeckelementen sicherzustellen, ist eine Sicherheitseinrichtung mit an dem Aktenschrank beabstandeten Endlageschaltern vorgesehen, die den Randbereichen des Abdeckelementes zugeordnet sind. In der Offenstellung des Abdeckelementes unterbrechen die Endlageschalter die Stromversorgung für die elektromotorisch angetriebene Vorrichtung, so daß deren Betätigung in der Offenstellung des Abdeckelementes verhindert wird.

Den vorstehend beschriebenen Sicherheitseinrichtungen ist gemeinsam, daß diese relativ einfach zu manipulieren und somit zu umgehen sind. Eine solche Manipulation kann beispielsweise dadurch erfolgen, daß bei der Sicherheitsvorrichtung gemäß DE-A-24 32 292 ein separater Stecker, der nicht mit dem Abdeckelement verbunden ist, in die Buchse eingeführt wird. Die Sicherheitseinrichtung für den Aktenschrank gemäß DE-A-24 44 891 ist relativ leicht durch eine Manipulation der Endlageschalter, die diese in den Schließzustand versetzt, überbrückbar.

Aufgabe der Erfindung ist es daher, eine Sicherheitseinrichtung für ein Gehäuse vorzuschlagen, bei der eine Umgehung nur mit relativ großem Aufwand möglich ist. Gleichzeitig soll die Sicherheitseinrichtung aus einfachen, zuverlässigen Bauteilen aufgebaut sein.

Zur Lösung dieser Aufgabe ist bei einer Sicherheitseinrichtung der eingangs genannten Art erfindungsgemäß vorgesehen, daß das isolierte Leitungsstück sich über die Breite des Abdeckelementes erstreckt und an seinen gegenüberliegenden Enden jeweils ein Kontaktteil vorgesehen ist, das mit jeweils einem zugeordneten, am Gehäuse festgelegten Gegenstück elektrisch verbindbar ist.

Die Erfindung geht von der Überlegung aus, daß eine Manipulation der Sicherheitseinrichtung umso unwahrscheinlicher wird, desto höher der Aufwand für die Manipulation ist und desto größer das technische Wissen zur Durchführung der Manipulation sein muß. Durch das Entfernen eines kompletten Stromkreisabschnittes aus einem, den Stillstand der bewegten Teile bewirkenden Stromkreis wird dessen Unterbrechung an zwei Stellen sichergestellt. Dadurch, daß der Abschnitt fest mit der Abdeckung verbunden ist, wird er zwangsweise mit der Öffnungsbewegung der Abdeckung aus dem Stromkreis entfernt. Manipulationen sind zwar nach wie vor nicht vollständig ausgeschlossen, setzen aber ein gewisses elektrotechnisches Grundwissen voraus, das bei dem Bedienpersonal nicht selbstverständlich ist. Außerdem benötigt die Manipulation eine gewisse Zeit, so daß sie sich nicht bei einer stunden- oder tagelangen Benutzung des Schrankes lohnt. Auf jeden Fall ist eine derartige Manipulation wesentlich komplizierter als das einfache Verklemmen der bisher vorgesehenen Kontakte mittels beispielsweise eines Streichholzes oder einer Büroklammer.

Vorteilhafte Ausgestaltungen der Erfindung ergeben sich aus den Unteransprüchen.

Vorteilhaft ist der Stromkreis der Einspeise-Stromkreis der elektromotorisch angetriebenen Vorrichtung.

Bei erfindungsgemäßen Ausführungsformen wird das Abdeckelement durch eine Tür, eine Leiste, eine Klappe oder eine Gehäuseblende gebildet.

Bei einer Weiterbildung sind mehrere Abdeckelemente vorhanden, von denen jedes mit einem Abschnitt des Stromkreises versehen ist.

Zweckmäßig ist das isolierte Leitungsstück als Draht oder Schiene ausgebildet.

Bei einer weiteren Ausgestaltung bilden das Kontaktelement und das zugeordnete Gegenstück einen Messerkontakt.

Eine derartige Sicherheitseinrichtung ist prinzipiell bei allen technischen Einrichtungen einsetzbar, bei denen hinter einem Abdeckelement rotierende oder translatorisch bewegte Teile vorhanden sind. Das Abdeckelement kann dabei an der normalen Arbeitsöffnung vorgesehen sein, wie beispielsweise im Falle eines Karteischrankes oder an einer Wartungsöffnung, die lediglich bei Service der Vorrichtung benutzt wird.

Weitere Vorteile und Ausgestaltungen der Erfindung ergeben sich aus der Beschreibung eines Ausführungsbeispiels anhand der Figuren. Es zeigen:
- Figur 1: einen Büroschrank mit Gehäuse zum Einbau der Sicherheitseinrichtung
- Figur 2: einen Ausschnitt des Büroschranks im Arbeitsbereich und
- Figur 3: ein elektrisches Schaltbild zum Stromkreis.

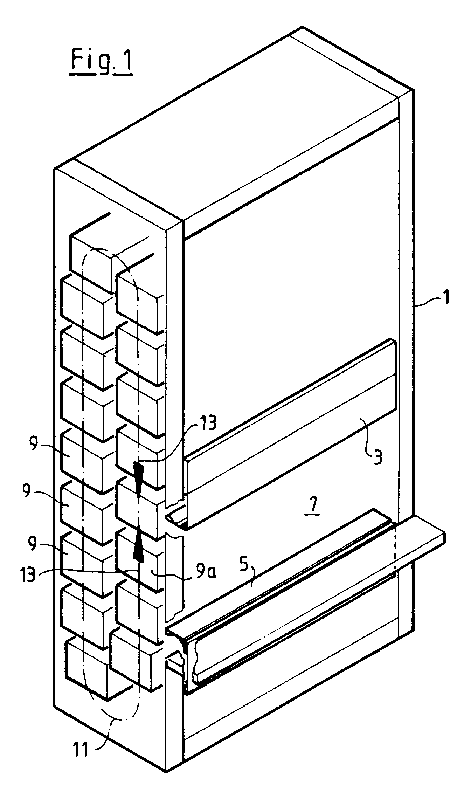

In Figur 1 ist ein Schrank 1 dargestellt, der mit einer oberen Schieberolltür 3 und einer unteren Schieberolltür 5 versehen ist. Anstelle der Schieberolltüren 3,5 sind auch zur Seite verschiebbare Schiebetüren oder normale Klapptüren einsetzbar. Die untere Schieberolltür 5 ist im zurückgeschobenen Zustand gezeichnet, so daß sie eine Arbeitsöffnung 7 freigibt. Durch die Arbeitsöffnung 7 hindurch besteht ein Zugriff auf einen Karteikasten 9a, der sich auf Höhe der Arbeitsöffnung 7 befindet.

Der Karteikasten 9a ist Teil einer paternosterartig geführten Gesamtkartei, die im bezeichneten Ausführungsbeispiel aus insgesamt siebzehn Karteikästen 9 besteht. Die Karteikästen 9 sind an beweglichen Trägern (nicht gezeigt) befestigt, die als bewegliche Teile entlang der eingezeichneten Kurve 11 geführt werden. Durch die beiden Einfachpfeile 13 ist angedeutet, daß die Bewegungsrichtung der Träger mit den Karteikästen 9 wahlweise im Uhrzeiger- oder gegen Uhrzeigerrichtung vorgebbar ist. Bei einem solchen Büroschrank 1 besteht die Auflage, daß sich die im Inneren befindlichen, beweg-lichen Teile 9 im Ruhezustand befinden müssen, wenn eines der Abdeckelemente betätigt bzw. geöffnet ist. Dieser Bestimmung wird in der Regel dadurch Rechnung getragen, daß die Schieberolltüren 3,5 mit Kontakten versehen sind, die den elektromotorischen Antrieb für die Karteikästen 9 stromlos schalten.

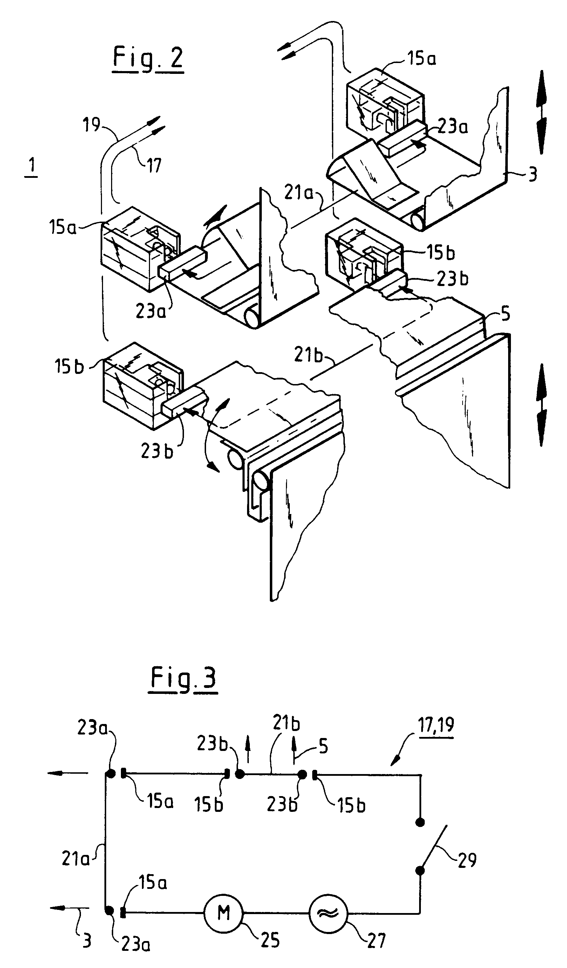

In Figur 2 ist ein Ausschnitt des Büroschranks 1 im Bereich der Arbeitsöffnung 7 gezeigt. Im gezeichneten Zustand befinden sich beide Schieberolltüren 3,5 gezeigten, sicherheitstechnisch geschlossenem Zustand. Am Rahmenaufbau (nicht gezeigt) des Büroschranks 1 sind Kontaktelemente 15 angebracht. Für jede Schieberolltür 3,5 sind zwei paarweise angeordnete Kontaktelemente 15a bzw. 15b vorhanden. Die Kontaktelemente 15a und 15b sind jeweils an eine elektrische Sicherheitsschleife angeschlossen, deren Unterbrechung einen Stillstand des Antriebs für die Karteikästen 9 bewirkt. Die Sicherheitsschleife für die obere Schieberolltür 3 ist mit 17 bezeichnet, und die für die untere Schieberolltür 5 mit 19.

Am Beispiel der oberen Schieberolltür 3 soll die Funktion der Sicherheitsschleife 17 in Verbindung mit der Stellung der Schieberolltür 3 näher erläutert werden. Analoges gilt für die untere Schieberolltür 5. Wie gezeigt, umfaßt die Sicherheitsschleife 17 einen Stromkreisabschnitt 21, der fest mit der Schieberolltür 3 verbunden ist. Im gezeigten, sicherheitstechnischen geschlossenen Zustand der Schieberolltür 3 überbrückt der Stromkreisabschnitt 21 die freien Enden der Kontaktelemente 15a. Wird die Schieberolltür 3 nach oben angehoben, oder das wippenartige Abeckelement um Scharniere nach unten oder oben betätigt, so wird gleichzeitig der Stromkreisabschnitt 21 mit fortbewegt. Dadurch ist die Sicherheitsschleife 17 unterbrochen. Die Unterbrechung erfolgt durch Entfernen des vollständigen Stromkreisabschnitts 21. Die Sicherheitsschleife 17 ist, wie anhand der Figur 3 gezeigt ist, im einfachsten Fall direkt der Einspeise-Stromkreis des elektromotorischen Antriebs für die Karteikästen 9. Durch Entfernen des Stromkreisabschnitts 21 erfolgt dann unmittelbar, direkt und zwangsweise ein Stillstand der Karteikästen, da der Stromkreis zum Motor gleichzeitig mit der Schieberolltür-Bewegung unterbrochen wird.

Anstelle dieser direkten Einspeise-Stromkreisunterbrechung kann es sich bei der Sicherheitsschleife 17 auch um einen ruhestromüberwachten sekundären Stromkreis handeln, der über ein Schütz den eigentlichen Einspeise-Stromkreis unterbricht, sobald die Sicherheitsschleife 17 unterbrochen wird.

Wie anhand der Figur 2 gezeigt ist, wird vorzugsweise jede Schieberolltür 3,5 mit dem Stromkreisabschnitt 21 versehen. Dadurch wird die Bewegung der Karteikästen 9 unterbrochen, sobald eines der Abdeckelemente an den Schieberolltüren 3,5 betätigt wird. Anstelle der gezeichneten zwei Sicherheitsschleifen 17,19 ist es auch möglich, lediglich eine Sicherheitsschleife vorzusehen, wobei dann die Stromkreisabschnitte 21a,21b elektrisch in Reihe geschaltet sind (siehe Figur 3). Bei Entfernen nur eines der Stromkreisabschnitte 21a, 21b wird also die Stromzufuhr zum Antrieb unterbrochen.

Die Stromkreisabschnitte 21a,21b sind beispielsweise durch ein isoliertes Leitungsstück, wie ein isolierter Draht oder eine isolierte Schiene gebildet. Das Leitungsstück ist an seinen beiden Enden mit je einem Kontaktteil 23a bzw. 23b versehen, die mit dem entsprechenden Gegenstück am Kontaktelement 15a bzw. 15b elektrisch verbindbar sind. Die elektrische Verbindung kann dabei durch Eingriffselemente, wie beispielsweise einem Messerkontakt, ausgeführt sein oder lediglich durch Druckkontaktelemente, die durch Federkraft die Kontaktteile 23a, 23b gegen das Gegenstück, den Kontaktelementen 15a und 15b, andrücken. Im einschlägigen Stand der Technik gibt es hierzu vielfältige Ausführungsformen. Je nach Betriebsspannung des Antriebsmotors sind die Kontaktelemente 15a, 15b gegen eine Berührung durch das Bedienungspersonal abzusichern.

In Figur 3 ist ein elektrisches Schaltbild zur Veranschaulichung der Anschlüsse im Stromkreis dargestellt. Die beiden Stromkreisabschnitte 21a, 21b sind in Reihe zueinander geschaltet. Bei Öffnung eines der beiden Abdeckelemente der Schieberolltüren 3,5 wird der Stromkreis unterbrochen. Dieses ist durch die Pfeile mit dem Schieberolltür-Bezugszeichen symbolisiert. Unmittelbar in dem Stromkreis befindet sich auch der elektromotorische Antrieb 25 und die Zuführung der Netzspannung 27. Mittels eines Schalters 29 kann der Antrieb 25 für die paternosterartig geführten Karteikästen 9 zu- oder abgeschaltet werden. Wie bereits erwähnt, kann anstatt dieser direkten Stromkreisunterbrechung auch ein Sekundärstromkreis vorgesehen sein, bei dessen Unterbrechung ein Schütz geschaltet wird, welches den Stromkreis des elektromotorischen Antriebs 25 unterbricht.

Die vorstehend beschriebene Realisierungsmöglichkeit stellt eine mögliche Ausführung eines Gehäuses mit Schieberolltüren dar. In gleicher Weise kann jeder Verschluß einer Zugriffsöffnung in einem Gehäuse mit mechanisch bewegten Teilen realisiert werden, in dem in entsprechender Weise der richtig abdeckende Sitz eines Verschlußund Abdeckelementes kontrolliert wird und abhängig davon z.B. ein Schütz im Speisestromkreis der elektromotorisch angetriebenen Teile betätigbar ist.

## Patentansprüche

1. Sicherheitseinrichtung für ein Gehäuse(1), insbesondere einen Schrank, die eine elektromotorisch angetriebene Vorrichtung zum Verfahren von innerhalb des Gehäuses (1) aufgenommenen Gegenständen und eine Zugangsöffnung (7) aufweist, die mit mindestens einem verstellbaren Abdeckelement (3, 5) versehen ist, wobei die Sicherheitseinrichtung eine Schalteinrichtung umfaßt, die Kontaktteile (23a, 23b) und zugeordnete Gegenstücke (15a, 15b) aufweist, und die von dem mindestens einen Abdeckelement (3, 5) betätigbar ist und in der Offenstellung des mindestens einen Abdeckelementes (3, 5) die Stromversorgung der elektromotorisch betriebenen Vorrichtung unterbricht, wobei das mindestens eine Abdeckelement (3, 5) ein isoliertes Leitungsstück aufweist, das einen Stromkreisabschnitt (21a, 21b) eines Stromkreises (17, 19) darstellt, dessen Unterbrechung die Stromversorgung der elektromotorisch angetriebenen Vorrichtung unterbricht, und das Leitungsstück an seinen Enden mit je einem Kontaktteil (23a, 23b) versehen ist, die mit zugeordneten, am Gehäuse (1) festgelegten Gegenstücken (15a, 15b) elektrisch verbindbar sind, dadurch gekennzeichnet, daß das isolierte Leitungsstück sich über die Breite des Abdeckelementes (3, 5) erstreckt und an seinen gegenüberliegenden Enden jeweils ein Kontaktteil (23a, 23b) vorgesehen ist, das mit jeweils einem zugeordneten, am Gehäuse festgelegten Gegenstück (15a, 15b) elektrisch verbindbar ist.

2. Sicherheitseinrichtung nach Anspruch 1, dadurch gekennzeichnet, daß der Stromkreis (17) der Einspeise-Stromkreis der elektromotorisch angetriebenen Vorrichtung ist.

3. Sicherheitseinrichtung nach Anspruch 1 oder 2, dadurch gekennzeichnet, daß das Abdeckelement durch eine Tür (3, 5), eine Leiste, eine Klappe oder eine Gehäuseblende gebildet wird.

4. Sicherheitseinrichtung nach einem der Ansprüche 1 bis 3, dadurch gekennzeichnet, daß mehrere Abdeckelemente (3, 5) vorhanden sind, von denen jedes mit einem Abschnitt (21a, 21b) des Stromkreises (17, 19) versehen ist.

5. Sicherheitseinrichtung nach einem der Ansprüche 1 bis 4, dadurch gekennzeichnet, daß das isolierte Leitungsstück als Draht oder Schiene ausgebildet ist.

6. Sicherheitseinrichtung nach einem der Ansprüche 1 bis 5, dadurch gekennzeichnet, daß das Kontaktelement (15a, 15b) und das zugeordnete Gegenstück (23a, 23b) einen Messerkontakt bilden.

## Claims

1. Safety device for a housing (1), in particular for a cabinet, having an electric motor-operated device for displacing articles accommodated inside the housing (1) and an access opening (7) provided with at least one adjustable cover element (3, 5), the safety device comprising a break device which has contact parts (23a, 23b) and associated mating components (15a, 15b), and which is operable by the at least one cover element (3, 5) and in the open position of the at least one cover element (3, 5) interrupts the power supply of the electric motor-operated device, the at least one cover element (3, 5) comprising an insulated line section which is a circuit portion (21a, 21b) of a circuit (17, 19), the interruption of which circuit interrupts the power supply of the electric motor-operated device, and the line section being provided at each of its ends with a contact part (23a, 23b) which is electrically connectable to an associated mating component (15a, 15b) fixed on the housing (1), characterized in that the insulated line section extends over the width of the cover element (3, 5) and at each of its opposite ends a contact part (23a, 23b) is provided, which is electrically connectable to an associated mating component (15a, 15b) fixed on the housing.

2. Safety device according to claim 1, characterized in that the circuit (17) is the feeder circuit of the electric motor-operated device.

3. Safety device according to claim 1 or 2, characterized in that the cover element is formed by a door (3, 5), a strip, a flap or a housing panel.

4. Safety device according to one of claims 1 to 3, characterized in that a plurality of cover elements (3, 5) are provided, each of which is provided with a portion (21a, 21b) of the circuit (17, 19).

5. Safety device according to one of claims 1 to 4, characterized in that the insulated line section takes the form of a wire or rail.

6. Safety device according to one of claims 1 to 5, characterized in that the contact element (15a, 15b) and the associated mating component (23a, 23b) form a blade contact.

## Revendications

1. Dispositif de sécurité pour un boîtier (1), en particulier une armoire, qui présente un dispositif commandé par moteur électrique pour le déplacement d'objets logés à l'intérieur du boîtier (1), et une ouverture d'accès (7) qui est pourvue d'au moins un élément de recouvrement réglable (3, 5), le dispositif de sécurité comprenant un dispositif de commutation qui présente des éléments de contact (23a, 23b) et des éléments de contact complémentaires (15a, 15b), et qui peut être actionné par ledit au moins un élément de recouvrement (3, 5), et qui interrompt dans la position ouverte dudit au moins un élément de recouvrement (3, 5) l'alimentation en courant du dispositif commandé par moteur électrique, ledit au moins un élément de recouvrement (3, 5) présentant un tronçon de ligne isolé qui représente une section (21a, 21b) d'un circuit électrique, dont l'interruption interrompt l'alimentation en courant du dispositif commandé par moteur électrique, et où le tronçon de ligne est pourvu à ses extrémités respectives d'un élément de contact (23a, 23b), qui peuvent être reliés électriquement par des éléments de contact complémentaires (15a, 15b) fixés sur le boîtier (1), caractérisé en ce que le tronçon de ligne isolé s'étend sur la largeur de l'élément de recouvrement (3, 5), et en ce qu'il est prévu à ses extrémités situées en vis-à-vis un élément de contact respectif (23a, 23b) qui peut être relié électriquement à un élément de contact complémentaire respectif (15a, 15b) fixé sur le boîtier.

2. Dispositif de sécurité selon la revendication 1, caractérisé en ce que le circuit électrique (17) est le circuit électrique d'alimentation du dispositif commandé par moteur électrique.

3. Dispositif de sécurité selon l'une ou l'autre des revendications 1 et 2, caractérisé en ce que l'élément de recouvrement est formé par une porte (3, 5), une barrette, un clapet ou un volet de boîtier.

4. Dispositif de sécurité selon l'une quelconque des revendications 1 à 3, caractérisé en ce qu'il existe plusieurs éléments de recouvrement (3, 5) dont chacun est pourvu d'une section (21a, 21b) du circuit électrique (17, 19).

5. Dispositif de sécurité selon l'une quelconque des revendications 1 à 4, caractérisé en ce que le tronçon de ligne isolé est réalisé sous la forme d'un fil ou d'un rail.

6. Dispositif de sécurité selon l'une quelconque des revendications 1 à 5, caractérisé en ce que l'élément de contact (15a, 15b) et l'élément de contact complémentaire (23a, 23b) forment un contact à couteau.
